# EUROPEAN PATENT SPECIFICATION

(11) **EP 0 472 015 B1**
(45) Date of publication and mention of the grant of the patent: **27.12.1995**
(21) Application number: 91112779.3
(22) Date of filing: 30.07.1991
(51) Int. Cl.: H04N 13/02

(54) **Stereoscopic video pickup device**
Stereoskopische Video-Abtasteinrichtung
Dispositif d'enregistrement vidéo stéréoscopique

(30) Priority: 10.08.1990 JP 213179/90
(43) Date of publication of application: 26.02.1992
(73) Proprietor: Murakami, Kanji, Tokyo (JP)
(72) Inventor: Murakami, Kanji, Tokyo (JP)
(74) Representative: Niedmers, Ole, Dipl.-Phys.

(56) References cited:
- EP-A- 0 146 476
- GB-A- 2 168 565
- US-A- 2 417 446

## Description

The present invention relates to a stereoscopic video pickup device and, more particularly, to a stereoscopic video pickup device having a zoom mechanism for controlling a zoom magnification and a stereoscopy adjustment mechanism for adjusting a stereoscopy which are driven in association with each other.

Small-sized and light video cameras using solid-state pickup elements have recently been developed. A stereoscopic image pickup device using such small-sized cameras is disclosed in U.S.-A-4,881,122.

In the stereoscopic image pickup device, an angle between optical axes of the first and second video cameras is adjusted to focus these video cameras on an object.

However, when a distance between the video cameras and the object is very long, a stereoscopic effect cannot sufficiently be obtained even if the angle of the optical axes is adjusted.

It is accordingly an object of the present invention to provide a stereoscopic video pickup device as set out in claim 1, wherein information of zoom mechanisms included in first and second cameras is used to control a distance between the cameras, thereby enabling an image to be picked up without degrading a degree of its stereoscopy even when a distance between an object and the cameras is great.

With the above structure of the stereoscopic video pickup device, even when a distance between the object and first and second cameras is long and the zoom mechanisms are adjusted, the object can be stereoscopically imaged since a distance between the cameras is lengthened.

This invention can be more fully understood from the following detailed description when taken in conjunction with the accompanying drawings, in which:
Fig. 1 is a perspective view for explaining the mechanism of a stereoscopic video pickup device according to a first embodiment of the present invention;
Fig. 2 is a block diagram for explaining a system control circuit of the device shown in Fig. 1;
Fig. 3 is a block diagram minutely showing the system control circuit shown in Fig. 2;
Fig. 4 is a graph showing data conversion patterns stored in a data converter shown in Fig. 3;
Fig. 5 is a block diagram showing a system control circuit and a data converter of a stereoscopic video pickup device according to a second embodiment of the present invention; and
Fig. 6 is a view showing a stereoscopic video pickup device according to a third embodiment of the present invention.

Embodiments of the present invention will be described with reference to the accompanying drawings.

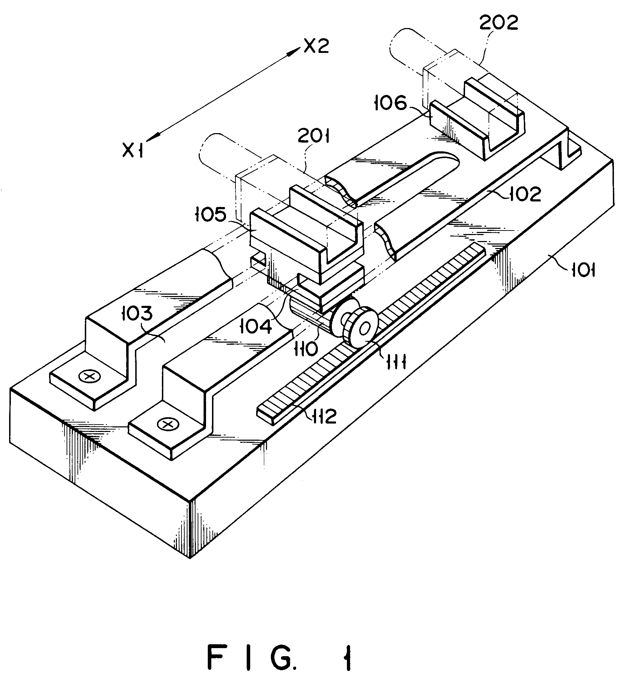

In Fig. 1, reference numeral 101 indicates a base, and a supporting plate 102 is attached to the upper surface of the base 101 in its longitudinal direction. The supporting plate 102 constitutes a camera supporting mechanism. Both end portions of the supporting plate 102 are bent so as to be fixed onto the base 101 by screws. A portion of the supporting plate 102 other than the end portions is therefore spaced away from the base 101.

A slit 103 extends from one end of the supporting plate 102 toward the other end. The slit 103 is provided with a slide component 104 having an H-shaped side. Two concave portions of the slide component 104 are engaged with opposing edge portions of the slit 103. The slide component 104 is thus movable along the slit 103.

A camera holder 105 is fixed onto the upper surface of the slide component 104 to hold a first camera body 201 in a direction perpendicular to the longitudinal direction of the slit 103. Another camera holder 106 is fixed to one end of the base 101 to hold a second camera body 202. The first and second camera bodies 201 and 202 each include first and second zoom mechanisms, and horizontally arranged in substantially the same direction. Further, the first and second camera bodies are positioned so that their optical axes cross each other ahead.

A motor 110 is attached to the undersurface of the slide component 104. A gear 111 of the motor 110 is engaged with a rack 112 which is fixed on the upper surface of the base 101 in the same direction as that of the slit 103. When the motor is rotated, the first camera body 201 is moved in the direction of arrow X1 or X2 as shown in Fig. 1. In other words, the first camera body 202 is controlled so as to move away from or toward the camera body 202, while fixing the directions of the optical axes of the first and second camera bodies 201 and 202. Hereinafter a distance between the first and second camera bodies 201 and 202 is referred to as a camera interval.

The reason why only the first camera body 201 can be moved and the second camera body 202 is fixed in the stereoscopic video pickup device described above, is that an image pickup operation is performed while a user is looking through a viewfinder.

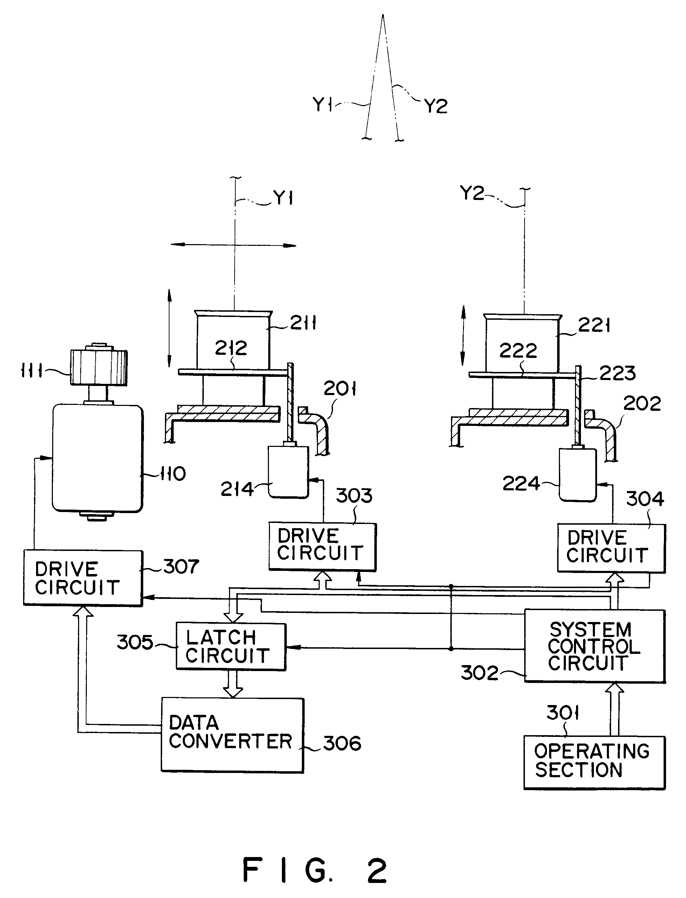

A method for controlling the first and second camera bodies 201 and 202 will be described with reference to Fig. 2.

In Fig. 2, reference numeral 301 denotes an operating unit including a switch for turning on and off a power supply, a switch for starting and stopping an image pickup operation, a switch for selecting a diaphragm, and a zoom operating unit. If the zoom operating unit is operated, a zoom instruction signal is input to a system control circuit 302. The zoom operating unit includes a zoom-in button and a zoom-out button. When the zoom-in button is depressed, the system control circuit 302 measures a period of time for which the zoom-in button is depressed and outputs zoom adjustment data representing the direction and amount of rotation of the motor. The zoom adjustment data is latched by drive circuits 303 and 304.

When the zoom adjustment data is supplied to the drive circuits 303 and 304, the drive circuits control zoom mechanisms included in the first and second camera bodies 201 and 202, respectively. Since the zoom mechanisms of the first and second camera bodies are the same, one of them, that is, the zoom mechanism of the first camera body 201 will be described.

In Fig. 2, reference numeral 211 denotes a zoom lens unit of the first camera body 201, and a flange 212 is fixed to the circumference of the zoom lens unit 211. A worm shaft 213 is engaged with the flange 212 and rotated by means of a motor 214 housed in the camera body. If the motor 214 rotates forward, the zoom lens unit 211 retreats and then a zoom-in function is carried out. If the motor 214 rotates backward, the zoom lens unit 211 moves onward and then a zoom-out function is carried out. The motor 214 is, for example, a stepping motor which rotates in response to drive pulses supplied from the drive circuit 303.

The zoom mechanism of the second camera body 202 is driven in the same manner as that of the first camera body 201. Since the second camera body 202 has the same zoom mechanism as that of the first camera body 201, it includes a zoom lens unit 221, a flange 222, a worm shaft 223, a motor 224, and drive circuit 304 which correspond to those of the first camera body.

The zoom adjustment data is supplied to a latch circuit 305 and then latched by the latch circuit 305. Output data of the latch circuit 305 is supplied to a data converter 306. The output data represents a zoom magnification. In accordance with the zoom magnification, the data converter 306 outputs interval control data for controlling the camera interval between the first and second camera bodies 201 and 202.

The interval control data is latched by a drive circuit 307. The drive circuit 307 thus causes the first camera body 201 to move away from the second camera body 202 or to move toward it.

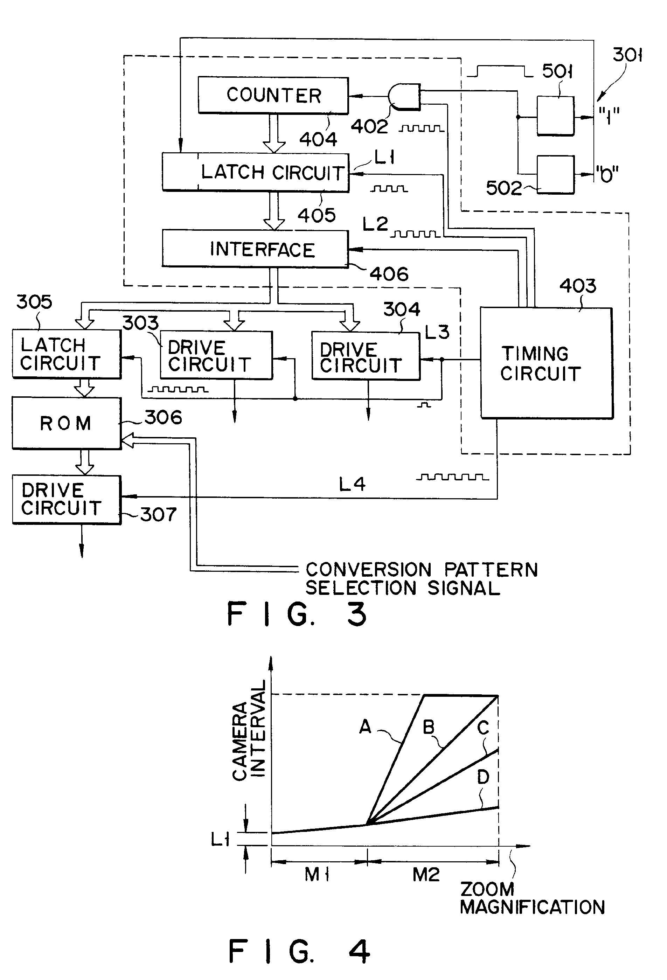

Fig. 3 illustrates the inside of the system control circuit 302 which responds to the zoom instruction signal.

When the zoom instruction signal is input from a terminal 401, AND circuit 402 is turned on, and clocks generated from a timing generator 403 are counted by a counter 404. Thus, time required for a zoom operation is measured. Data of the measured time is supplied to a latch circuit 405. The data is then latched by latch pulses generated from the timing generator 403 and, in this time, polarity data indicative of zoom-in and zoom-out is also latched by the latch circuit 405. The polarity data is supplied to the uppermost bit of the latch circuit 405 as "1" or "0" in accordance with a user's operation of a zoom-in operation button 501 or a zoom-out operation button 502. More specifically, when the zoom-in operation button 501 of the operating unit 301 is depressed, both the polarity data "1" and the zoom instruction signal are output. When the zoom-out operation button 502 of the operating unit 301 is depressed, both the polarity data "0" and the zoom instruction signal are output.

When the polarity data and measured data (which corresponds to angle data representing the amount of rotation of the motor) are latched by the latch circuit 405, these data are supplied to the drive circuits 303 and 304 through an interface 406 as zoom adjustment data and latched by the circuits 303 and 304. The latch pulses supplied to the drive circuits 303 and 304 are output from the timing generator 403. The drive circuits 303 and 304 determines a direction of rotation of the motor in accordance with the polarity data included in the zoom adjustment data. The amount of rotation of the motor depends upon the angle data.

The zoom adjustment data is latched by the latch circuit 305.

The output data of the latch circuit 305 is converted by the data converter 306. (A conversion pattern of the data will be described later.) Data output from the data converter 30 includes polarity data for determining a direction of rotation of the motor 110 and conversion angle data for determining an amount of rotation of the motor 110. Various data conversion patterns of the data converter 306 can be selected in response to conversion pattern selection signals supplied from the operating unit 301.

Fig. 4 is a graph showing the relationship between input data converted by the data converter 306 and output data of the data converter 306.

Specifically, the data converter 306 includes a ROM, and an output of the latch circuit 305 is used as a read address. Conversion patterns A, B, C and D as shown in Fig. 4 are stored in the data converter 306, and one of the conversion patterns can be selected by the operating unit 301.

The conversion pattern A is suitable for stereoscopically imaging an object which is moving distantly. When the zoom magnification is low and falls within range M1 in Fig. 4, the conversion pattern A is suitable, for example, for imaging the whole of a base from which a space shuttle is launched and, in this case, the scene around the base is also imaged. When the space shuttle is launched and its altitude becomes high, an image of the space shuttle may be picked up by rapidly increasing the zoom magnification. Since the space shuttle is imaged largely on the entire screen, the shuttle can stereoscopically be imaged if the interval between the first and second camera bodies 201 and 202 is quickly enlarged. It is thus preferable to control the motor 110 so that the interval between the first and second camera bodies is quickly enlarged.

The conversion pattern B is suitable for imaging a car race. The ratio of variation in the zoom magnification to variation in the camera interval is 1 to 1 in range M2 of the zoom magnification. If the zoom magnification and camera interval are so controlled, an image of one of cars racing on a circuit can stereoscopically be picked up.

The conversion pattern D is suitable for imaging a near object. For example, such a near object is a person moving indoors. When the object is imaged, a stereoscopic image pickup effect can be obtained without greatly changing the camera interval. A camera interval M1 is a distance between the first and second camera bodies 201 and 202 which come nearest to each other.

The conversion pattern C is suitable for imaging a near scene or the like.

In the first embodiment described above, as shown in Fig. 2, even though the first camera body 201 is moved in the X1 or X2 direction, the optical axes Y1 and Y2 of the first and second camera bodies 201 and 202 are held at a predetermined angle with respect to the X1 and X2 directions.

The present invention is not limited to the first embodiment.

In the first embodiment, the zoom adjustment data output from the system control circuit 302 includes the polarity data representing the direction of rotation of the motor and the angle data representing the amount of rotation of the motor.

However, the zoom adjustment data may include other data, that is, the polarity data representing the direction of rotation of the motor and a mere zoom designation code. When the zoom adjustment data includes the zoom designation code, the amount of rotation of the motor is determined by a period of time for which the zoom designation code is output. The polarity data output from the latch circuit 305 is input to a predetermined bit of the drive circuit 307 as it is.

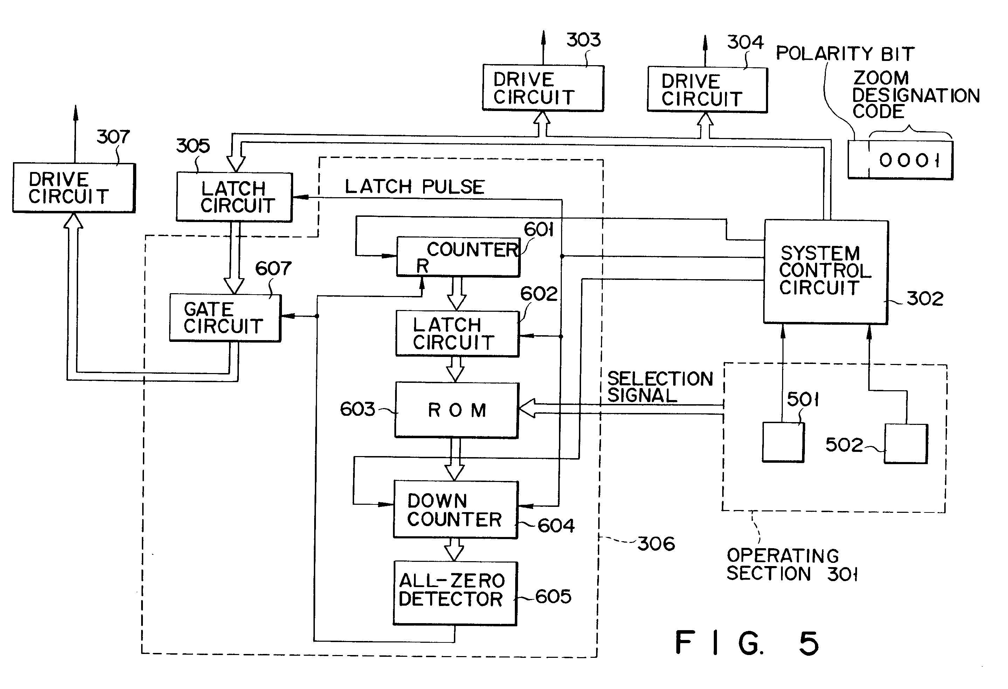

Assume that zoom adjustment data including a polarity bit "1" or "0" and a zoom designation code "001" is output from the system control circuit 302 in Fig. 5. The zoom designation code is generated by depressing the zoom-in and zoom-out operation buttons 501 and 502. The polarity bit "1" is obtained when the zoom-in operation button 501 is depressed, and the polarity bit "0" is obtained when the zoom-out operation button 502 is depressed.

The drive circuits 303 and 304 are enabled when the zoom designation code is input and causes their corresponding motors to rotate in a direction according to the time period for which the zoom designation code is input.

The system control circuit 302 supplies a latch pulse to the latch circuit 305. The zoom adjustment data is thus latched by the latch circuit 305.

The data converter 306 includes a counter 601. The counter 601 starts counting clocks from when the zoom adjustment data is output from the system control circuit 302 and, in other words, it measures a period of time for which the zoom adjustment data exists. Since zoom adjustment is continued during the period of time, the measured time represents information of an amount of zoom adjustment (zoom magnification).

When the zoom adjustment data disappears, the data measured by the counter 501 is latched by a latch circuit 602. The measured data is then input to an address of a ROM 603 for its conversion. Data output from the ROM 603 is supplied to a preset input terminal of a down counter 604. The down counter 604 counts down the data output from the ROM 603 as an initial value in response to the clocks. If the outputs of the down counter 604 are all "0", an all-zero detector 605 detects it and a gate circuit 607 is turned off.

The gate circuit 607 serves to output the zoom adjustment data from the latch circuit 305 and supply it to the drive circuit 307. The time required for supplying the zoom adjustment data to the drive circuit is controlled by an output signal of the all-zero detector 605. If the output data of the ROM 603 is preset to the down counter 604, the output of the all-zero detector 605 becomes low in level and the gate circuit 607 is turned on. If the outputs of the down counter 604 are all "0," the output of the all-zero detector 605 becomes high in level and the gate circuit 607 is turned off.

The zoom adjustment data is thus output from the gate circuit 607, and a period of time for which the zoom adjustment data exists at an input terminal of the drive circuit 307 is proportionate to the count value of the down counter 604. More specifically, in the zoom-in operation, when the preset value of the down counter 604 is large, the ON-state time of the gate circuit 607 is long, and the camera interval is enlarged in proportion to a period of the ON-state time. When the preset value of the down counter 604 is small, the ON-state time of the gate circuit 607 is short, and the camera interval is slightly enlarged.

In the zoom-out operation, the camera interval is so controlled that it becomes narrow.

In the second embodiment shown in Fig. 5, the same advantage as that of the first embodiment can be obtained. Conversion data of a plurality of patterns analogous to the patterns shown in Fig. 4, is stored in the ROM 603. One of the patterns is selected in response to the selection signals supplied from the operating unit.

The present invention is not limited to the second embodiment. Various modifications can be made to the means for supplying control data to the drive circuit 307 to control an interval between the motors. Further, various modifications can be made to the mechanism for moving the first camera body 201.

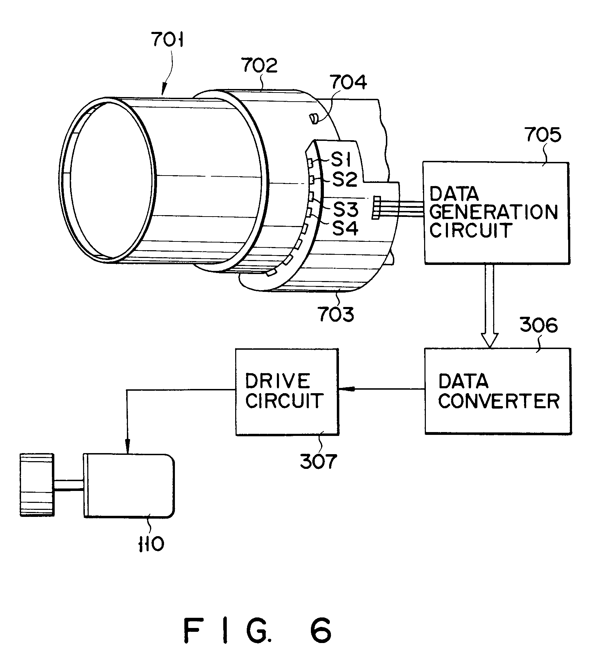

Fig. 6 shows a third embodiment of the present invention. In this embodiment, when zoom is manually adjusted, the magnification of the zoom is detected, and control data is supplied to the drive circuit 307.

A zoom lens unit 701 is provided with a ring 702 for zoom adjustment. The amount of rotation of the ring 702 and the amount of the zoom adjustment are detected by a rotation angle detector 703. The rotation angle detector 703 is arranged at a fixed position of the body of the zoom lens unit and includes a plurality of switches S1, S2, S3, S4, ... which are selectively short-circuited by a projecting portion 704 of the ring 702. The rotation position of the ring 702, that is, the amount of the zoom adjustment can be determined by detecting which of the switches is short-circuited. The outputs of the switches S1, S2, S3, S4, ... are supplied to a data generation circuit 705. Data output from the data generation circuit 705 is converted by the data converter 306 and the converted data is input to the drive circuit 307 of the motor 110.

In the above embodiments, the first camera body 201 can be moved. However, not the first camera body but the second camera body 202 can be moved, and both the first and second camera bodies 201 and 202 can be moved to control the camera interval. In the latter case, a user has to perform zoom adjustment while observing a monitor on which image pickup signals of the camera bodies are processed.

As has been described above, according to the present invention, the information of the zoom mechanisms of the camera bodies is used for controlling the distance between the camera bodies and, even though the distance between the cameras and object is long, an image of the object can be stereoscopically picked up.

## Claims

1. A stereoscopic video pick up device comprising:
a first camera (201) body including a first zoom mechanism;
a second camera (202) body including a second zoom mechanism;
a camera supporting mechanism (101-106) for supporting at least said first camera body so that said first and second camera bodies are horizontally arranged in substantially a same direction, an angle between optical axes of said first and second camera bodies is fixed, and said first camera body is movable with respect to said second camera body;
drive means (110, 111, 112) including a camera interval control motor, for moving said first camera body with respect to said second camera body;
zoom control means (212, 213, 214, 222, 223, 224) for outputting zoom adjustment data to control both said first and second zoom mechanisms; and
data conversion means for converting the zoom adjustment data output from said zoom control means into camera interval control data to drive said camera interval control motor,
characterized in that
said data conversion means is adapted to derive from said zoom adjustment data a value corresponding to the zoom magnification, is adapted to convert said zoom magnification value to a distance interval between said first and second camera bodies according to a conversion pattern that is selected on the basis of the type of scene picked up and includes a ROM storing at least three conversion patterns (A, B, C, D), in which said selectable conversion characteristics (A, B, C, D) change when the zoom magnification value is smaller than a predetermined value, and said conversion characteristics (A, B, C, D) rise at respectively different positive inclination angles when the zoom magnification value exceeds the predetermined value.

## Patentansprüche

1. Stereoskopische Video-Abtasteinrichtung, umfassend einen ersten Kamerakörper (201), der einen ersten Gummilinsenmechanismus aufweist;
einen zweiten Kamerakörper (202), der einen zweiten Gummilinsenmechanismus aufweist;
einen Kameratragmechanismus (101 - 106) zur Aufnahme wenigstens des ersten Kamerakörpers, so daß der erste und der zweite Kamerakörper horizontal im wesentlichen in derselben Richtung ausgerichtet sind, wobei ein Winkel zwischen optischen Achsen des ersten und zweiten Kamerakörpers fest ist und der Kamerakörper drehbar in bezug auf den zweiten Kamerakörper ist;
Antriebsmittel (110, 111, 112), die einen Kameraabstandsteuermotor für die Bewegung des ersten Kamerakörpers in bezug auf den zweiten Kamerakörper aufweisen;
Gummilinsensteuermittel (212, 213, 214, 222, 223, 224) für die Lieferung von Gummilinseneinstellungsdaten zur Steuerung sowohl des ersten als auch des zweiten Gummilinsensteuerungsmechanismus;
und Datenwandlermittel zur Wandlung der von den Gummilinsensteuerungsmitteln gelieferten Gummilinseneinstellungsdaten in Kameraabstandsteuerungsdaten zum Antrieb des Kameraabstandsteuerungsmotors,
dadurch gekennzeichnet,
daß das Datenwandlermittel dazu dient, aus den Gummilinseneinstellungsdaten einen Wert entsprechend der Gummilinsenvergrößerung zu erzeugen, und dazu, den Gummilinsenvergrößerungswert in eine Entfernungsspanne zwischen dem ersten und dem zweiten Kamerakörper gemäß einem Wandlungsschema umzuwandeln, das auf der Grundlage eines abgetasteten Bildes ausgewählt wird, wobei die Gummilinsensteuerungsmittel einen Nurlesespeicher (ROM) umfassen, der wenigstens drei auswählbare Wandlungsschemata (A, B, C, D) speichert, und wobei sich die auswählbaren Wandlungscharakteristika (A, B, C, D) ändern, wenn der Gummilinsenvergrößerungswert kleiner als ein vorbestimmter ist, und daß die Wandlungscharakteristika (A, B, C, D) an jeweiligen unterschiedlichen positiven Steigungswinkeln zunehmen, wenn der Gummilinsenvergrößerungswert den vorbestimmten Wert überschreitet.

## Revendications

1. Dispositif de prise de vue vidéo stéréoscopique, qui comprend :
- un premier corps de caméra (201) comportant un premier mécanisme de zoom,
- un second corps de caméra (202) comportant un second mécanisme de zoom,
- un mécanisme (101-106) de support de caméra pour supporter au moins ledit premier corps de caméra de telle sorte que lesdits premier et second corps de caméra soient disposés horizontalement sensiblement dans la même direction, que l'angle entre les axes optiques desdits premier et second corps de caméra soit fixe et que ledit premier corps de caméra puisse être déplacé par rapport audit second corps de caméra,
- des moyens d'entraînement (110, 111, 112) incluant un moteur de commande de l'intervalle entre caméras, servant à déplacer ledit premier corps de caméra par rapport audit second corps de caméra,
- des moyens (212, 213, 214, 222, 223, 224) de commande du zoom pour émettre des données de réglage de zoom afin de commander lesdits premier et second mécanismes de zoom, et
- des moyens de conversion de données pour convertir les données de réglage de zoom émises par lesdits moyens de commande du zoom en données de commande de l'intervalle entre caméras afin d'exciter ledit moteur de commande de l'intervalle entre caméras, caractérisé en ce que lesdits moyens de conversion de données sont capables de déduire, à partir desdites données de réglage de zoom, une valeur qui correspond au grossissement du zoom, sont capables de convertir ladite valeur qui correspond au grossissement du zoom en une longueur d'intervalle entre lesdits premier et second corps de caméra d'après un motif de conversion qui est choisi sur la base du type de scène dont on réalise la prie de vue, et comprennent une mémoire morte ROM conservant au moins trois motifs de conversion (A, B, C, D) sélectionnables, dans lesquels lesdites particularités de conversion (A, B, C, D) sélectionnables changent quand la valeur de grossissement du zoom est plus faible qu'une valeur prédéterminée et lesdites particularités de conversion (A, B, C, D) croissent pour des angles d'inclinaison positive respectivement différents quand la valeur de grossissement du zoom dépasse la valeur prédéterminée.
